Europäisches Patentamt

European Patent Office

Office européen des brevets

(19)

(11) **EP 1 689 140 A1**

(12) **EUROPEAN PATENT APPLICATION**

(43) Date of publication:
09.08.2006 Bulletin 2006/32

(51) Int Cl.:
*H04L 27/26* (2006.01)

(21) Application number: 06002351.2

(22) Date of filing: 06.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 04.02.2005 KR 2005010872

(71) Applicant: Samsung Electronics Co., Ltd.
Suwon-si, Gyeonggi-Do (KR)

(72) Inventors:
• **Ko, Seong-Yun**
Samsung Electronics Co., Ltd.
Suwon-si
Gyeonggi-do (KR)

• **Youn, Myeon-Kee**
Samsung Electronics Co., Ltd.
Suwon-si
Gyeonggi-do (KR)
• **Park, Joo-Yong**
Samsung Electronics Co., Ltd.
Suwon-si
Gyeonggi-do (KR)
• **Song, Hak-Hoon**
Samsung Electronics Co., Ltd.
Suwon-si
Gyeonggi-do (KR)

(74) Representative: **Lang, Johannes**
Bardehle Pagenberg Dost Altenburg Geissler,
Postfach 86 06 20
81633 München (DE)

(54) **Apparatus and method for compensating for a frequency offset in a wireless communication system**

(57) Disclosed is an apparatus and method for compensating for frequency offset in a wireless communication system using an OFDM system which can compensate for phase change due to carrier frequency offset and sampling frequency offset of data carried on subcarriers. The apparatus includes an FFT window adjustment unit for receiving sampling data when a packet is received, setting a start point of a FFT window at a start point of long training symbols and adjusting a position of the FFT window according to an input window adjustment value, an FFT unit for receiving an output of the FFT window adjustment unit, transforming time-domain symbols into frequency-domain symbols and calculating FFT coefficients, a channel estimation unit for receiving the coefficients from the FFT unit, estimating a channel state and outputting a value for compensating for an estimated value, a channel compensation unit for compensating for the frequency-domain symbols using the output of the channel estimation unit and a phase error tracking and correction unit for receiving an output of the channel compensation unit, detecting a sampling frequency offset and a phase change of a carrier signal and outputting the window adjustment value to the FFT window adjustment unit.

FIG.2

EP 1 689 140 A1

**Description**

BACKGROUND OF THE INVENTION

1. Field of the Invention

The present invention relates to an apparatus and method for compensating for frequency offset in a wireless communication system, and more particularly to an apparatus and method for compensating for frequency offset in a wireless communication system that uses an Orthogonal Frequency Division Multiplexing (OFDM) system.

2. Description of the Related Art

A wireless communication system transfers data using specified frequencies. Wireless communication systems have been classified into several kinds of wireless communication system. A representative wireless communication system is a mobile communication system, which is briefly classified into a synchronous type mobile communication system and an asynchronous type mobile communication system. Additionally, the Institute of Electrical and Electronic Engineers (IEEE) 802.11 standard based system has been proposed as a system in which fixed terminals constitute a network through a specified Access Point (AP) in an office or school, and recently, the development of the IEEE 802.16 standard based system and other systems are being developed to achieve portable Internet communications.

The above-described mobile communication system is a system that transmits data by multiplying a carrier signal of a specified frequency band by an orthogonal code. In addition, the IEEE 802.11 system or the IEEE 802. 16 system transmits data using Orthogonal Frequency Division Multiplexing (OFDM) or Orthogonal Frequency Division Multiple Access (OFDMA) technologies. The OFDM or OFDMA system transmits data in such a manner that the system generates OFDM symbols corresponding to the data and carries the OFDM symbols on a specified carrier signal to transmit the OFDM symbols. The OFDM system refers to the technology that carries information on a plurality of subcarriers which are orthogonal with each other. In view of the fact that the OFDM system uses a plurality of subcarriers, it is similar to a Frequency Division Multiplexing (FDM) system. However, the OFDM system has advantages in that spectrum overlapping is possible among the respective subcarriers due to their orthogonality and thus it has a higher bandwidth efficiency than that of the FDM system. Additionally, since the length of an OFDM symbol is quite longer than the length of an impulse response of the channel, it is reliable against multipath fading and it has the advantage of high-speed transmission in comparison to a single carrier type system. The OFDM transmission system includes an OFDM transmitter and an OFDM receiver. The OFDM transmitter produces OFDM symbols from raw data in the unit of a bit to be transmitted and carries the OFDM symbols on a high-frequency wave. The OFDM receiver receives the OFDM symbols transmitted from the OFDM transmitter and restores the raw data in the unit of a bit transmitted from the transmitter. The implementation of the receiver is more complicated than that of the transmitter. Accordingly, the performance of the receiver greatly affects the transmission performance of the entire system. This is because the transmitter has almost no room for the occurrence of signal distortion and can produce OFDM symbols having a high Signal-to-Noise (S/N) ratio. The receiver requires a complicated signal processing algorithm, which may differ from system to system, for restoring the signal distorted due to the wireless channel having the multipath characteristic and the incompleteness of analog components. Although the performance of the receiver increases as the complexity of signal process is increased, the implementation of the receiver becomes complicated, so that the size of the semiconductor components and power consumption are increased.

The process in a receiver of extracting data an RF signal transmitted from a transmitter will be explained.

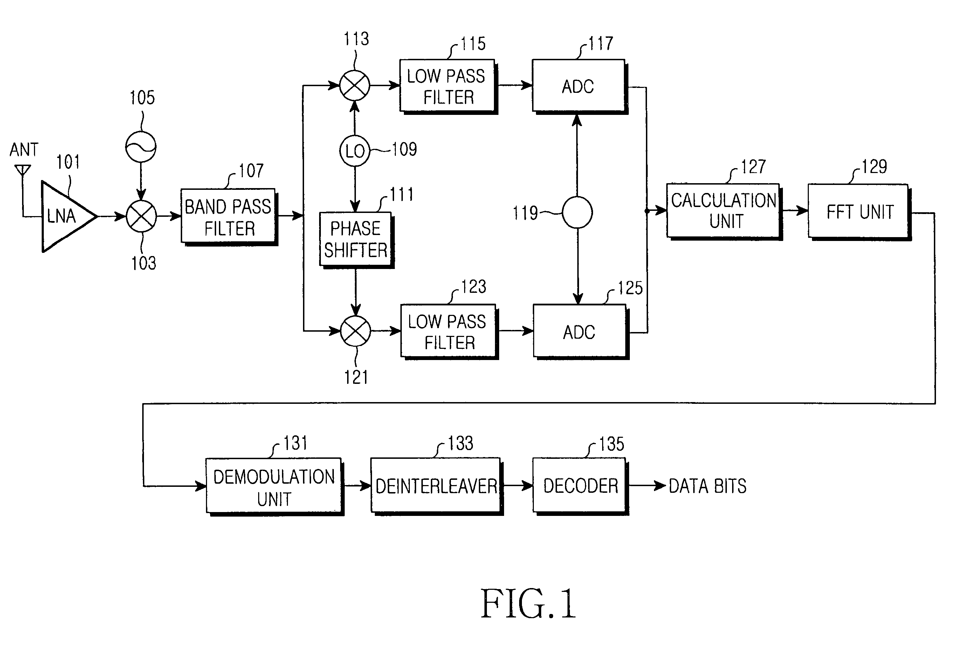

FIG. 1 is a block diagram illustrating the internal construction of a general receiver of an OFDM system

First, an RF signal that is a high-frequency signal propagated on the air is converted into an electric signal through an antenna ANT and is then input to a Low-Noise Amplifier (LNA) 101. The LNA 101 amplifies the received RF signal with low noise since the RF signal has undergone a great attenuation during its transmission on the air, and the low-noise-amplified high-frequency signal is input to a first mixer 103. The first mixer 103 receives a specified frequency signal output from a local oscillator 105, removes the carrier signal from the frequency signal, and converts the frequency signal into an Intermediate Frequency (IF) signal. The IF signal converted as described above includes a signal of a wanted frequency range and a signal of an unwanted frequency range. The signal output from the first mixer 103 is input to a Band Pass Filter (BPF) 107.

The BPF 107 passes a frequency signal of a predetermined band therethrough, but filters off the remaining signals, i.e., unwanted signals. The signal having passed through the BPF 107 is input to different mixers 113 and 121 to be converted into a baseband signal. The reason why the signal is input to different mixers is that the IF-processed signal should be divided into an in-phase component and a quadrature-phase component to be separately processed in the baseband. Hereinafter, the reference numeral 113 denotes a second mixer and 121 denotes a third mixer.

The second mixer 113 extracts the in-phase component signal from the filtered signal input from the BPF 107 by mixing the specified frequency signal input from local oscillator 109 and the filtered signal input from the BPF 107. The in-phase component signal passes through an Low Pass Filter (LPF) 115 that filters out an unwanted wave, and then is input to a first Analog-to-Digital Converter (ADC) 117. The first ADC 117 converts the analog in-phase component signal into a digital in-phase signal on the basis of a sampling clock signal generated from a sampling clock generator 119 to output the converted digital in-phase signal.

The signal output from the local oscillator 109 is also input to a phase shifter 111 which shifts the phase of the input signal by 90°, and the phase-shifted signal is input to the third mixer 121.

The third mixer 121 outputs an orthogonal phase component signal using the phase-shifted signal that is output from the phase shifter 111. The orthogonal phase component signal output from the third mixer 121 is input to an LPF 123 that filters out an unwanted wave, and the filtered orthogonal phase component signal is input to a second ADC 125. The second ADC 125 converts the analog quadrature-phase component signal into a digital quadrature-phase signal on the basis of the sampling clock signal generated from the sampling clock generator 119 to output the converted digital quadrature-phase signal.

The in-phase signal and the quadrature-phase signal converted into the baseband digital signals are processed through a calculation unit 127. The calculation unit 127 performs diverse processes such as the detection of a frequency error correction time synchronization (sync), window adjustment for Fast Fourier Transform (FFT) performed after the detection, etc. The calculation unit 127 may be constructed by a Digital Signal Processor (DSP) that can process the digital signal at high speed. Symbols calculated by the calculation unit 127 are FFT-transformed by an FFT unit 129. FIG. 1 exemplifies that blocks required for the serial/parallel conversion, removal of Cyclic Prefix (CP) symbols, etc., are constructed inside the FFT unit 129. The FFT unit 129 transforms the input time-domain OFDM symbols into a frequency-domain signal that is a complex signal. The complex frequency-domain signal is input to and demodulated by a demodulation unit 131. The demodulation process performed by the demodulation unit 131 is a process of restoring a binary signal from the complex signal. If the demodulation of the complex signal to the binary signal performed by the demodulation unit 131 is completed, the demodulated symbols are input to a deinterleaver 133.

Generally, in the wireless communication system, interleaving is performed in order to prevent burst error from occurring due to channel fading and so on during transmission. Accordingly, in the system that performs the interleaving, the deinterleaving that corresponds to the interleaving should be performed. The symbols deinterleaved by the deinterleaver 133 are input to and decoded by a decoder 135. If the decoding is successfully performed, data bits are output.

In the above-described structure of the receiver, signal distortion that follows a transmission error may occur due to non-orthogonality among the orthogonal frequencies, i.e., subcarriers. On the assumption that the system is in a quasi-stationary state that the channel is not changed during transmission of a packet, two reasons why the orthogonality among the subcarriers in a commercialized burst OFDM system cannot be maintained are as follows.

First is the case in which the receiver cannot accurately be synchronized with the carrier frequency produced in the transmitter. Second is the case in which the sampling frequency used in a Digital-to-Analog Converter (DAC) of the transmitter is not accurately synchronized with the sampling frequency used in a DAC of the receiver.

Accordingly, the receiver needs to be provided with functions to compensate for the two phenomena as described above. The functions provided in the receiver in order to prevent the above-described offsets are referred to as a carrier frequency offset estimation and compensation function and a sampling frequency offset estimation and compensation function. These functions are performed in the calculation unit 127 of FIG. 1.

The OFDM signal distortion in the receiver due to the carrier frequency offset and the sampling frequency offset will now be explained. First, the signal transmitted from the transmitter will be explained. It is assumed that the modulated symbols which are carried on the k-th subcarrier of the transmitter correspond to a Quadrature-Amplitude Modulation (QAM)-modulated signal. If this signal is defined as $R_k$, the time-domain discrete signal output from the transmitter may be expressed by Equation (1),

$$x(n) = \frac{1}{N} \sum_{k=0}^{N-1} R_k \exp(j2\pi kn/N) * \exp(j2\pi f_{TX} nT_s) \qquad_{,n=0,1,2,...,N-1} \qquad \ldots\ldots(1)$$

where, n denotes a sampling time index, k a subcarrier index, N the total number of subcarriers that constitute the OFDM symbols, $f_{TX}$ a carrier frequency of an output signal, and $T_s$ a sampling period of a DAC provided in the transmitter.

In order to study the distortion of the signal, the output signal of the FFT unit 129 of FIG. 1 will be analyzed. The signal of the transmitter as expressed by Equation (1) is transmitted to the receiver through the channel on the air, and then is transfonned into the baseband signal as illustrated in FIG. 1. The transformed signal is input to the FFT unit 129 through the calculation unit 127. In this case, in order to study the distortion of the transmitted signal, the signal appearing at an output terminal of the FFT unit 129 of FIG. 1 as described above will be analyzed.

The time-domain baseband signal is converted into a frequency-domain signal by the FFT unit 129. The frequency-domain signal (i.e., FFT coefficients) becomes the QAM-modulated signal to be transmitted from the transmitter. At this time, if the signal output from the FFT unit 129 is X(k), on the assumption that the channel has perfectly been compensated for, the output signal may be expressed by Equation (2),

$$x(k) = R_k \exp(j2\pi\Delta f_c n_0 T's) * \exp(j2\pi k\Delta t n_0 / N) \quad \ldots\ldots(2)$$

where, $\Delta f_c$ denotes a carrier frequency offset, no a sampling index that corresponds to the start point of the time-domain symbols input to the receiver, $T'_s$ is a sampling frequency of an ADC, and $\Delta t$ denotes $\dfrac{T'_s - T_s}{T_s}$.

As can be seen from Equation (2), even if the effect of the wireless channel has perfectly been compensated for, two terms that distort the signal by changing the phase of the originally transmitted QAM signal exist. That is, the first exponential function term is the phase change occurring due to the carrier frequency offset, and the second exponential function term indicates the phase change due to the sampling frequency offset.

The phase changes according to the two exponential function terms are usually different from each other. Specifically, the phase change due to the carrier frequency offset is to the same for all of the subcarriers, whereas the phase change due to the sampling frequency offset increases linearly as the subcarrier index K increases. Accordingly, if the phase change due to the carrier frequency offset and the phase change according to the increase of the subcarrier index cannot accurately be estimated and compensated for, i.e., if the frequency offset cannot accurately be compensated for, the receiver would be unable to restore the transmitted signal.

SUMMARY OF THE INVENTION

Accordingly, the present invention has been designed to solve the above and other problems occurring in the prior art, and an object of the present invention is to provide an apparatus and method to compensate for frequency offset in a wireless communication system.

Another object of the present invention is to provide an apparatus and method to compensate for phase change due to carrier frequency offset in a wireless communication system using an OFDM system.

Still another object of the present invention is to provide an apparatus and method to compensate for sampling frequency offset of data carried on subcarriers in a wireless communication system using an OFDM system.

In order to accomplish the above and other objects, there is provided an apparatus to compensate for errors of received symbols in an OFDM system that includes an FFT window adjustment unit for receiving sampling data when a packet is received, setting a start point of a first FFT window at a start point of a first long training symbol, adjusting a position of the FFT window according to an input window adjustment value and outputting sampled symbols, an FFT unit for receiving an output of the FFT window adjustment unit, transforming time-domain symbols into frequency-domain symbols, calculating and outputting FFT coefficients when the long training symbols are received, a channel estimation unit for receiving the coefficients output from the FFT unit, estimating a channel state and outputting a value for compensating for an estimated value, a channel compensation unit for compensating for the frequency-domain symbols output from the FFT unit using the output of the channel estimation unit and a phase error tracking and correction unit for receiving an output of the channel compensation unit, detecting a sampling frequency offset and a phase change of a carrier signal and outputting the window adjustment value to the FFT window adjustment unit.

In accordance with another aspect of the present invention, there is provided a method to compensate for errors of received symbols in an OFDM system that includes receiving sampling data when a packet is received and setting a start point of a first FFT window prior to a start point of a first long training symbol, estimating a wireless channel using the long training symbols, FFT-transforming data symbols input after long training is performed and compensating for FFT-transformed data using an estimated value, separating pilot symbols from compensated symbols and estimating a carrier frequency offset and a sampling frequency offset from the separated pilot symbols, extracting an influence component due to the sampling frequency offset from influences due to the estimated carrier frequency offset and sampling frequency offset, estimating a change in the FFT window set with respect to the first long training symbol using the influence component of the extracted sampling frequency, correcting a position of the FFT window using the change, and estimating a signal distortion caused by the carrier frequency offset and the carrier frequency offset using an estimated value of the change, and compensating for phase distortion of a data signal among FFT output signals of a current symbol using an estimated value of a phase change distorted by the estimated carrier frequency offset and sampling frequency offset.

BRIEF DESCRIPTION OF THE DRAWINGS

The above and other objects, features and advantages of the present invention will be more apparent from the following detailed description taken in conjunction with the accompanying drawings, in which:

FIG. 1 is a block diagram illustrating the internal construction of a receiver of an OFDM system;

FIG. 2 is a block diagram illustrating the internal construction of a receiver for compensating for frequency offset in an OFDM system according to a preferred embodiment of the present invention;

FIG. 3 is a timing diagram illustrating a packet format of IEEE 802.11a system to which a frequency offset compensation process according to the present invention is applied; and

FIG. 4 is a detailed diagram illustrating a frequency offset compensation process applied to an OFDM system according to the present invention.

DETAILED DESCRIPTION OF THE PREFERRED EMBODIMENTS

Preferred embodiments of the present invention will be described in detail hereinafter with reference to the accompanying drawings. In the following description of the present invention, the same drawing reference numerals are used for the same elements even in different drawings. Additionally, a detailed description of known functions and configurations incorporated herein will be omitted when it may obscure the subject matter of the present invention.

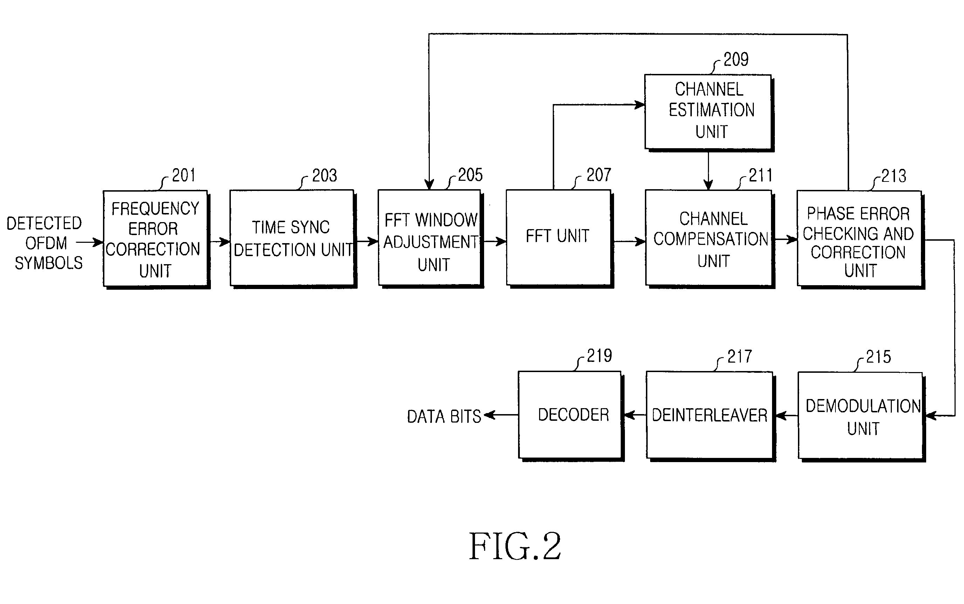

FIG. 2 is a block diagram illustrating the internal construction of a receiver for compensating for frequency offset in an OFDM system according to a preferred embodiment of the present invention. Hereinafter, with reference to FIG. 2, the construction and operation of a receiver of an OFDM system according to the present invention will be explained in detail.

In FIG. 2, the wireless processing part that transforms the RF signal into the baseband signal as illustrated in FIG. 1 is not illustrated. Although a packet detection unit is not illustrated in FIGs. 1 and 2, it detects if a packet is wirelessly input to the receiver and determines if the received packet is a valid packet. If the received packet is not valid, the packet detection unit discards the packet. If the received packet is valid, it is input to a coarse frequency error correction unit 201. The frequency error correction unit 201 coarsely compensates for an error of a carrier of the packet.

The process performed by the frequency effort correction unit 201 will be explained. Generally, in the OFDM system, two short training symbols are transmitted in order to detect the reception of a packet. Accordingly, the receiver receives the short training symbols and estimates the frequency offset using a technique that processes the training symbols in a time domain. Using the frequency offset estimated using the short training symbols, the frequency offset of the packet that is detected as the valid symbols can be estimated. If the frequency offset is compensated for, the distorted signal is coarsely compensated for.

Although the distortion component of the signal is greatly reduced as the received packet passes through the frequency error correction unit 201, the distorted signal is not completely compensated for. Accordingly, a perfect compensation is required with respect to the received packet after the coarse compensation. The signal having passed through the frequency error correction unit 201 that coarsely compensates for the frequency error is input to a fine time sync detection unit 203. The time sync detection unit 203 detects the time sync of the packet in order to detect the accurate start point of the packet composed of a plurality of OFDM symbols, and outputs the synchronized packet. The time sync detection unit 203 can recognize the start point of long training symbols of the packets. If the start and end points of the packet symbols are incorrectly recognized, inter-symbol interference between adjacent symbols may occur. It is very important to obtain the time sync in the time sync detection unit 203.

In the embodiment of the present invention, blocks transferred from an FFT window adjustment unit 205 to a phase error tracking and correction unit 213 are used to compensate for the frequency error.

The FFT window adjustment unit 205 adjusts windows required when the following FFT unit 207 performs the FFT transform. As described above, although the start point of the long training symbol is obtained with respect to the received packet through the fine time sync detection unit 203, sampling frequency errors still exist due to the DAC and ADC of the transmitter and receiver. As the sampling index is increased, the start point of a certain symbol gradually deviates from the start point of the transmitted symbol during transmission. If the sampling period of the receiver is longer than the sampling period of the transmitter, i.e., if $\Delta t > 0$, the number of samplings that constitute a packet in a time domain becomes less than the number samplings during transmission of the packet, and thus there is a difference in the number of samplings. This difference will be hereinafter referred to as a "stuff", and should be replenished. By contrast, if the sampling period of the receiver becomes shorter than the sampling period of the transmitter, i.e., $\Delta t < 0$, samples remain in each packet. Accordingly, the remaining samples, hereinafter referred to as a "rub", should be taken away. Stuff and rub information are output from the time sync detection 203 to the FFT window adjustment unit 205.

The FFT window adjustment unit 205 adjusts the window according to the received stuff and rub information and outputs window-adjusted OFDM symbols to the FFT unit 207. The FFT unit 207 is the same as the FFT unit 129 of FIG. 1, and thus the detailed explanation thereof will be omitted. The FFT unit 207 transforms the time-domain signal into a frequency-domain signal. The signal output from the FFT unit 207 is input to a channel estimation unit 209 that performs a channel estimation. The channel estimation unit 209 detects the characteristic of the wireless channel from the two long training symbols. Since these long training symbols are already known by the transmitter and the receiver, the characteristic of the channel can be detected using the known symbols.

The symbols output from the FFT unit 207 are input to a channel compensation unit 211. The channel compensation unit 211 compensates for the symbols output from the FFT unit 207 using channel compensation values input from the channel estimation unit 209. That is, the channel compensation unit 211 performs the compensation of the signal received from the FFT unit 207 using the characteristic of the channel estimated using the long training symbols. In this case, channel influences of all OFDM symbols input after the long training symbols are compensated for. The reason why the channel estimation is performed once for each packet is that it is assumed that the channels are in a quasi-stationary state in the burst OFDM system.

The symbols on which channel compensation has been performed are input to the phase error tracking and correction unit 213. The phase error tracking and correction unit 213 estimates the signal distortion of the input signal due to the carrier frequency offset and the sampling frequency offset. Then, the phase error tracking and correction unit 213 generates stuff or rub information for the window adjustment using the estimated values and provides the stuff or rub information to the FFT window adjustment unit 205. The process of calculating such information will now be explained in more detail.

The signal output from the phase error tracking and correction unit 213 is input to a demodulation unit 215. The demodulation unit outputs the symbols before being modulated by mapping the complex value of the input signal onto the QAM signal on the I-Q quadrant. The demodulated symbols are input to and rearranged by a deinterleaver 217 as described above. The signal output from the deinterleaver 217 is input to a decoder 219. The decoder 219 may be implemented differently depending upon the systems. That is, the decoder may differ according to the kind of encoder used in the transmitter. Generally, the decoder may be a Viterbi decoder, turbo decoder, or LDPC decoder. In the system which uses an Forward Error Correction (FEC) unit that can perform an error correction and so on, the decoder can reduce the transmission error probability or restore the transmission error.

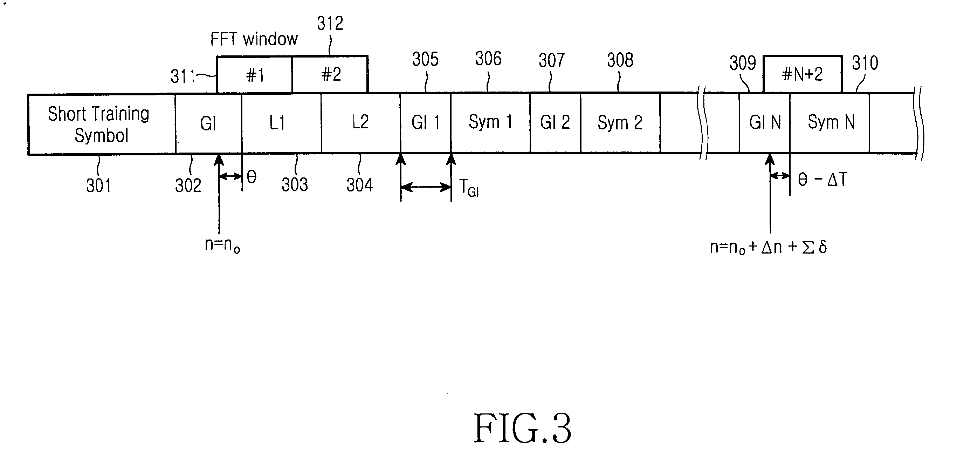

The operation of the receiver of the OFDM system according to the present invention will be explained in more detail with reference to the timing diagram of FIG. 3.

FIG. 3 is a timing diagram illustrating a packet format of the IEEE 802.11 a system to which a frequency offset compensation process according to the present invention is applied.

Referring to FIG. 3, the physical packet format of an IEEE 802.11 a wireless LAN, a burst OFDM system, begins with a short training symbol 301. The receiver can detect the packet and check the validity using the short training symbol. Additionally, the frequency error correction unit 201 as illustrated in FIG. 2 conducts a coarse estimation and compensation for the carrier frequency offset. The packet detection and the coarse carrier frequency offset estimation and compensation are not the subject matter of the present invention, and no further explanation thereof will be made.

Hereinafter, the sampling frequency offset compensation method, compensation for the difference between the start point of an FFT window and the start point of an actual symbol, compensation for phase distortion of a signal due to the frequency offset and correction of an FFT window adjustment value δ according to the present invention will be explained in detail with reference to FIG. 3.

1. Compensation for Sampling Frequency Offset

As explained with reference to FIG. 2, the frequency error correction unit 201 coarsely corrects for the carrier frequency offset in a time domain. According to this signal of which the carrier frequency offset is corrected, the time sync detection unit 203 that is the packet sync block can recognize the start point of the long training symbol 301. Here, if it is assumed that the input packet is sampled by 20MHz, the receiver can set the FFT window value which is input to the 64-point FFT unit 207. The FFT window should accurately include 64 samples, and it is very important to predict the first sample of the FFT window.

Generally, the first sample of the FFT window is set to a sample that precedes the start point of the long training symbol (L1) 303 by 2~3 samples. That is, as illustrated in FIG. 3, the start point of the FFT window is positioned to begin within guard interval (GI) 302. The start point of the FFT window precedes the start point of the symbol in order to lower the possibility of a transmission error due to the inter-symbol interference if the start point of the symbol is wrongly estimated by the packet sync block. However, if the FFT window does not accurately coincide with the position of the actual symbol, the result of the FFT changes and it is necessary to compensate for this at the stage that follows the FFT unit 207.

In FIG. 3, if the index of the sample selected as the start point of the first FFT window is no, there exists the time difference θ between the sample that is the start point of the FFT window and the start point of the actual L1 303. Here, θ is a parameter determined during the design of the receiver. Accordingly, the FFT window adjustment unit 205 of the receiver serves to keep the difference θ uniform.

The reason why the difference θ cannot be kept uniform as the FFT window passes through several symbols is that the sampling frequency offset exists. Specifically, if the sampling period of the receiver is different from the sampling period of the transmitter, although one OFDM symbol is composed of 64 samples in the transmitter, the packet expands/shrinks with time. Accordingly, the start point of a certain FFT window gradually deviates from the start point of the actual symbol. In order for the receiver to keep the difference within a specified range, the FFT window adjustment unit 305 should adjust the window range to a constant value by rubbing/stuffing the samples.

As can be seen from FIG. 3, since L1 symbol 303 and L2 symbol 304 are provided, the N-th data symbol corresponds to the (N+2)-th FFT window, and in order to satisfy the above condition, i.e., in order for the FFT window adjustment unit 305 to keep the sampling period of the transmitter and the sampling period of the receiver within the specified range, the condition of $\Delta T < |T_s|$ should be satisfied. Accordingly, the sample index n to satisfy this condition can be determined by Equation (3).

$$n = n_0 + \Delta n + \sum \delta, \quad \Delta n = 80 * (N - 1) + 128 + 16 \quad \ldots\ldots(3)$$

In Equation (3), δ is updated for each symbol in order to adjust the FFT window, and has a value of '-1', '0' or '1'. The constant '80' included in $\Delta n$ is the number samples that constitute GI+ symbol in the packet made during the transmission, '128' is the number of samples that constitute two training symbols, and '16' is the number of samples that constitute one GI. Additionally, from Equation (3), $\Delta T$ of the above condition can be expressed by Equation (4).

$$\Delta T = (\Delta n + \sum \delta) T'_s - \Delta n T_s \quad \ldots\ldots(4)$$

It can be recognized that by adjusting the value of δ for each symbol through the above-described method, the start point of the FFT window can be kept uniform.

2. Compensation for the Difference between the Start Point of an FFT Window and the Start Point of an Actual Symbol

If a symbol included in the FFT window passes through the FFT unit 207, 64 FFT coefficients are calculated and output from the FFT unit 207. In this case, the respective FFT coefficients become the sizes and phases of the respective subcarriers corresponding to the OFDM symbol. If a symbol included in the FFT window #1 311 passes through the FFT unit 207, the FFT coefficient that corresponds to the subcarrier having a subcarrier index k can be expressed by Equation (5).

$$x(k) = H_k L_k \exp(j2\pi k \Delta t n_0 / N) \exp(j2\pi \Delta f_c n_0 T's + \theta_c) \exp(-j2\pi k \Delta f \theta) \quad \ldots(5)$$

In Equation (5), $H_k$ indicates the signal size and phase distortion due to a transmission medium, $\Delta f_c$ is the remaining carrier frequency offset after the carrier frequency offset is briefly compensated for, and $\theta_c$ is the carrier phase difference in a state that n=0. In the same manner, the FFT output of a symbol included in the FFT window #2 312 can be expressed by Equation (6).

$$x(k) = H_k L_k \exp(j2\pi k \Delta t n_0 / N) \exp(j2\pi \Delta f_c n_0 T's + \theta_c) \exp(-j2\pi k \Delta f \theta) \exp(j2\pi k \Delta f 64(T's - T_s)) \exp(j2\pi \Delta f_c 64 T's)$$

$$\ldots\ldots(6)$$

By comparing Equation (5) with Equation (6), it can be recognized that the difference between them is only the last two exponential terms in Equation (6). That is, Equation (6) additionally includes the two exponential terms that are not included in Equation (5). It is also recognized that the two exponential terms are very close to '1'. Accordingly, by estimating the channel using the arithmetic mean after dividing Equation (5) and Equation (6) by $L_k$, the channel response can be expressed by Equation (7).

$$\overline{H_k} = H_k \exp(j2\pi k\Delta t n_0 / N) \exp(j2\pi\Delta f_c n_0 T's + \theta_c) \exp(-j2\pi k\Delta f\theta) \quad ....(7)$$

In Equation (7), since the long training symbol is a signal arranged between the transmitter and the receiver, it is possible to estimate the channel response. The channel response estimated in Equation (7) includes the influence by $\theta$, and this means that the compensation will be performed with respect to the existence of $\theta$, i.e., with respect to the fact that the FFT window does not accurately coincide with the actual symbol, during the symbol channel compensation.

If the FFT output is obtained with respect to a certain symbol (Sym N) 310 by the same method as Equation (5) and Equation (6), it can be expressed by Equation (8).

$$x(k) \simeq H_k X_k \exp(j2\pi k\Delta t n_0 / N) \exp(j2\pi\Delta f_c n_0 T's + \theta_c) \exp(-j2\pi k\Delta f\theta) \exp(j2\pi k\Delta f\Delta T) \exp(j2\pi\Delta f_c (\Delta n + \sum\delta)T'_x)$$

$$.......(8)$$

Accordingly, by multiplying Equation (8) by Equation (7) for compensating for the channel calculated from Equation (5) and Equation (6) and dividing Equation (8) by the square of the absolute value of Equation (7), the channel-compensated signal can be obtained by Equation (9).

$$X_{equal}(k) = X_k \exp(j2\pi k\Delta f\Delta T) \exp(j2\pi\Delta f_c (\Delta n + \sum\delta)T'_x) \quad ......(9)$$

In Equation (9), two exponential terms exist. The two exponential terms indicate the phase distortion of the signal due to the sampling frequency offset and the carrier frequency offset. Accordingly, by compensating for the two exponential terms, the receiver can restore the original signal $X_k$ from the signal distortion due to the carrier frequency offset and the sampling frequency offset. Additionally, the influence of $\theta$ has vanished as the channel compensation is performed. With respect to the signal FFT-transformed by the FFT unit 207, it is not required for the receiver to estimate the time interval between the start point of the FFT window and the start point of the actual symbol and to compare the estimated value with $\theta$. It is enough for the receiver to just estimate and compensate for the difference $\Delta T$ between the time interval between the start point of the FFT window and the start point of the actual symbol and $\theta$.

3. Compensation for Phase Distortion of a Signal and Correction of an FFT Window Adjustment Value $\delta$

As described above, after the symbols are channel-compensated, the receiver should restore the original signal $X_k$, by compensating for the phase distortion of the signal appearing in Equation (9) and adjust the position of the FFT window by estimating $\Delta T$ and determining the value of $\delta$ on the basis of $\Delta T$. Accordingly, the FFT window adjustment value $\delta$ is determined by Equation (10) according to the presently estimated $\Delta T$.

$$\delta = -1; \Delta T > T_{S.SPEC}$$

$$\delta = +1; \Delta T < -T_{S.SPEC} \quad ......(10)$$

$$\delta = 0; Otherwise$$

In Equation (10), $T_{S,SPEC}$ denotes the sampling period defined when the OFDM system is designed. If the sampling period of the receiver is longer than the sampling period of the transmitter, the time interval between the start point of the FFT window and the start point of the actual symbol is gradually reduced until $\Delta T$ eventually becomes greater than $T_{S,SPEC}$. In this case, the receiver sets $\delta$ to '-1' in order to keep the time interval $\theta$ between the start point of the FFT window and the start point of the actual symbol uniform. This has the effect of moving the FFT window as much as one sample period in a direction that the start point of the FFT window becomes more distant from the start point of the actual symbol. If a situation to the contrary occurs, the FFT window should move in a direction that the FFT window approaches the actual symbol, and thus $\delta$ is set to '1'. In Equation (10), $\delta$ has the value of+1 or -1 regardless of whether or not the absolute value of $\Delta T$ is greater than one sample period. However, this value may be set to another value when the receiver is designed.

Through the above-described process, the receiver of the OFDM system can perform the adjustment of the FFT window.

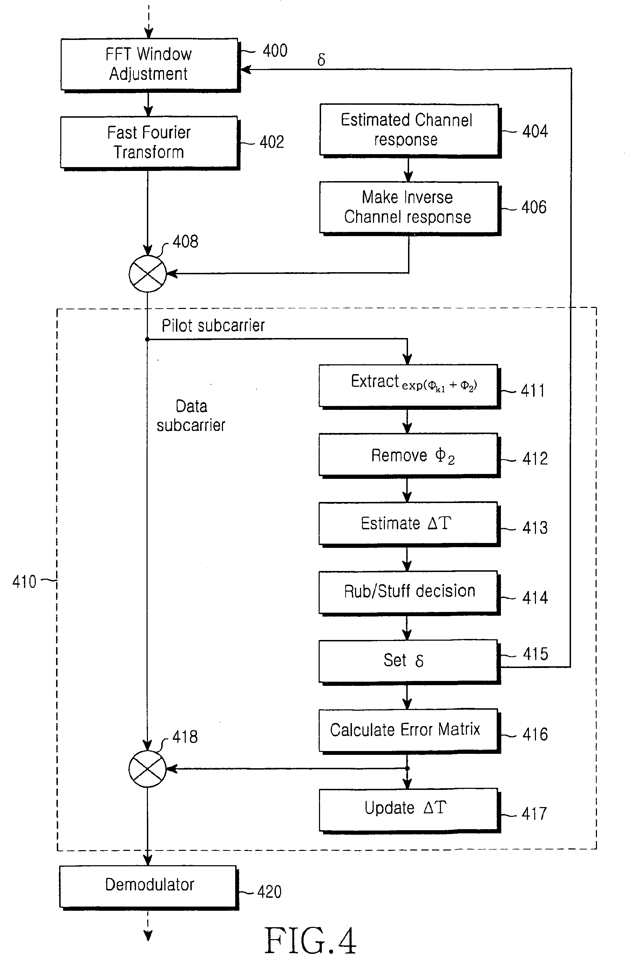

Hereinafter, the entire frequency offset compensation performed through the above-described processes will be explained with reference to FIG. 4. FIG. 4 illustrates the frequency offset compensation process applied to the OFDM system according to the present invention.

The FFT window adjustment unit 205 of the receiver receives sampling data from the time sync detection unit 203 at step 400, and compensates for the FFT window using the FFT window adjustment value $\delta$ output from the phase error tracking and correction unit 213. The symbol of which the FFT window is compensated for is inputted to the FFT unit 207. The FFT unit 205 performs the FFT at step 402 and calculates the FFT coefficients. At this time, the rub or stuff is not applied to the two long training symbols used to estimate the channel response.

Meanwhile, steps 404 and 406 explain the operation of the channel estimation unit 209 and the channel compensation unit 211 which process the symbols input from the FFT unit 207 in order to estimate the channel response. That is, the channel estimation unit 209 estimates at step 404 the channel using the long training symbol. Then, the channel compensation unit 211 compensates for the channel by generating an inverse channel response value of the estimated value using the training symbol. This compensation is performed at step 408. Specifically, the inverse channel response value of the estimated value is reflected in the symbols output from the FFT unit 207 for the compensation.

Referring again to FIGs. 2 and 3, with respect to the sizes and phases of the subcarriers calculated according to the FTT coefficients from the FTT unit 207, the channel compensation is performed using the channel response characteristic estimated by Equation (7). The channel-compensated signal can be obtained by Equation (9). Equation (11) can be derived by substituting $\Phi_{k1} = j2\pi k\Delta f\Delta T$ and $\Phi_2 = j2\pi\Delta f_c(\Delta n + \Sigma\delta)T_s$ in Equation (9).

$$X_{equal}(k) = X_k \exp(\Phi_{k1}) \exp(\Phi_2) \qquad \ldots\ldots(11)$$

Additionally, in order for the receiver to restore the original signal $X_k$, $\Phi_{kl}$ and $\Phi_2$ should be estimated, and for this, pilot signals included in the OFDM symbol are used. The pilot signals are signals pre-arranged between the transmitter and the receiver, and IEEE 802.11a standard based systems carry the pilot signals on subcarrier indexes #7, #21, #43 and #57. As described above, the pilot signals are extracted from the received signals through a process performed by the phase error tracking and correction unit 213. In FIG. 4, this process is illustrated in steps 411 to 416. In steps 411 to 416 in FIG. 4, the values for compensating for the signals included in the data subcarriers are generated using the extracted pilot signals. Specifically, the pilot signals among the outputs of the FFT unit 207 can be expressed by Equation (12).

$$P_{equal}(k) = P_k \exp(\Phi_{k1}) \exp(\Phi_2) \qquad \ldots\ldots(12)$$

In Equation (12), the values ofk are 7, 21, 43 and 57.

The phase error tracking and correction unit extracts only the exponential terms from the pilot signals at step 411. Since the receiving end already knows the originally transmitted pilot signals $P_k$ according to the characteristic of the pilot signals, $S_k$ can be defined by multiplying both sides of Equation (12) by the complex conjugates $P_k^*$ of the pilot signals as expressed by Equation (13).

$$S_k = P_k^* \times P_{equal}(k) = P_k^* \times P_k \exp(\Phi_{k1}) \exp(\Phi_2) = \exp(\Phi_{k1}) \exp(\Phi_2) \quad \ldots\ldots(13)$$

Since the size of $P_k$ is '1' in Equation (13), a signal the size of which is '1' and in which a distorted phase exists is obtained. The phase error tracking and correction unit 213 removes the influence of $\Phi_2$ from Equation (13) in order to estimate $\Phi_{kl}$ and $\Phi_2$ at step 412 and then proceeds to step 413 to estimate $\Delta T$. The process of calculating $\Delta T$ that is performed by the phase error tracking and correction unit 213 at step 413 will be explained. In order to calculate $\Delta T$, a vector with 1 raw and 3 columns is defined by Equation (14) using Equation (13).

$$V = [S_{21} \times S_7 * S_{43} \times S_{21} * S_{57} \times S_{43} *] \quad \ldots\ldots(14)$$

With reference to vector elements defined in Equation (14), since $\Phi_2$ that is unrelated to k exists commonly, it can be recognized that $\Phi_2$ has vanished by multiplying $S_k$ by the complex conjugate of $S_k$. Accordingly, Equation (15) can be derived by rewriting Equation (14).

$$V = [\exp(j2\pi\Delta f\Delta T \times 14) \exp(j2\pi\Delta f\Delta T \times 22) \exp(j2\pi\Delta f\Delta T \times 14)] \ldots(15)$$

In Equation(15), $\Delta T$ can be estimated by measuring respective elements of the vector V by applying Equation (14) to the pilot signals of the symbol and reflecting the value applied when the system is designed in $\Delta f$ in Equation (15).
The elements of the vector V have the same form of $\exp(j2\pi\Delta f\Delta T\Delta k)$, where $\Delta k$ is the difference between the subcarrier indexes). However, there exist many phases, i.e., $\angle V_{1X} = 2\pi\Delta f\Delta T\Delta k$, that satisfy the values of the elements calculated in Equation (14). Here, $\angle V_{1X}$ denotes the phases of vector elements with 1 row and X columns of the vector V. Accordingly, in order to correctly estimate $\Delta T$, it is required to determine a standard for selecting a proper value from among a great many values of $\angle V_{1X}$, and the present invention uses the fact that adjacent symbols have similar $\Delta T$ values. Since the adjacent symbols have similar values of $\Delta T$, it can be recognized that the values of $\angle V_{1X}$ are also similar to one another.
Using the above-described matters, $\Delta T$ can be estimated by Equation (16),

$$\Delta T_M = \frac{\angle V_{11,M} / 2\pi\Delta f 14 + \angle V_{12,M} / 2\pi\Delta f 22 + \angle V_{13,M} / 2\pi\Delta f 14}{3} \quad \ldots\ldots(16)$$

where, $|\angle V_{1XM} - \angle V_{1X,M-1}| \leq \pi and \angle \overline{V}_{1X,0} = 0, for M = 1,2,..., T$.
In Equation (16), $\Delta TM$ denotes $\Delta T$ estimated with respect to the M-th symbol after the long training symbol input to the FFT unit 207, and T is the total number of symbols after the long training symbol of the present packet. Additionally, $\angle V_{1X,M}$ denotes the phases of vector elements with 1 row and X columns of the vector V corresponding to the M-th symbol, and is determined by values measured in the receiver. $\angle \overline{V}_{1X,M}$ denotes the vector V estimated by substituting $\triangle T_M$ estimated from the M-th symbol in Equation (15).
As described above, $\angle V_{1X,M}$ includes a great number of values, and is determined as values which differ from $\angle V_{1X,M-1}$ by less than $\pi$.
However, if M=1, i.e., if the first symbol is positioned at the very front of the packet, $\Delta T$ approaches '0', and $\angle V_{1X,0} = 0$ is applied. In order to estimate $\Delta T_M$, the arithmetic mean of the values obtained from the respective elements of the vector V is calculated. By obtaining the arithmetic mean of the values, the influence of noise can be reduced and the accuracy of the estimated values can be heightened.

The estimation of $\Delta T_M$ is possible up to the range in that the present FFT window does not overlap the adjacent symbols, and since this range includes the maximum area that can be taken by the FFT window, it can be determined that the estimation range taken by Equation (16) is extremely wide. The estimation range of $\Delta T_M$ can be expressed by Equation (17).

$$\theta - T_{GI} \leq \Delta T_M \leq \theta \quad \ldots\ldots(17)$$

In Equation 17, $T_{GI}$ denotes time occupied by a guard interval GI. If $\Delta T_M$ is obtained as described above, the final value is determined through a low pass filtering process. This low pass filtering process is to prevent $\Delta T_M$ from abruptly changing due to the influence of noise, and uses the fact that $\Delta T$ between adjacent symbols does not abruptly change but tends to continuously increase/decrease for a specified interval. One of many algorithms may be used for the low pass filtering.

If $\Delta T_M$ is determined, the phase error tracking and correction unit 213 proceeds to step 414 and determines the rub or stuff using the calculated $\Delta T_M$. Then, the phase error tracking and correction unit 213 generates δ at step 415. In this case, Equation (18) can be derived using Equation (10).

$$\delta = -1; \Delta T_M > T_{S.SPEC}$$

$$\delta = +1; \Delta T_M < -T_{S.SPEC} \qquad \ldots\ldots(18)$$

$$\delta = 0; Otherwise$$

In comparing Equation (18) with Equation (10), the difference between them is notational only.

If δ is '-1' in the M-th symbol, the position of the start point of the FFT window which corresponds to the (M+1)-th symbol that is the symbol following the present symbol moves as much as one sample period in a direction that it becomes more distant from the start point of the actual symbol. Meanwhile, if δ is '+1' in the M-th symbol, the position of the start point of the FFT window which corresponds to the (M+1)-th symbol that is the symbol following the present symbol moves as much as one sample period in a direction that it approaches the start point of the actual symbol.

Thereafter, $\Phi_{k1}$ of Equation (13) is determined using $\Delta T_M$, and $exp(\Phi_2)$ is estimated. The phase error tracking and correction unit 213 can continuously compensate for errors by calculating an error metric using the estimated values. $\Phi_{kl}$ can be obtained from $\Phi_{kl} = j2\pi k\Delta f\Delta T_M$. Additionally, since in Equation (13), $S_k$ is a measured value and $\Phi_{k1}$ is determined, $exp(\Phi_2)$ can be obtained by Equation (19).

$$\exp(\Phi_2) = \frac{1}{4} \times \sum_{k=7,21,43,57} (S_k \times \exp(-\Phi_{k1})) \qquad \ldots\ldots(19)$$

In Equation (19), $exp(\Phi_2)$ denotes the phase distortion due to the carrier frequency offset estimated from the present symbol, and the influence of noise is reduced using the arithmetic mean when $exp(\Phi_2)$ is estimated.

Since $\Delta T_M$ and $exp(\Phi_2)$ are estimated from the pilot signals of the symbol that corresponds to the present FFT window through the above-described processes, the original signal $X_k$ produced in the transmitter can be restored by removing the influence of the carrier and sampling frequency offsets from the data signals of the subcarriers indicated by Equation (9) or Equation (11). That is, the offsets are calculated using the pilot subcarriers in step 418, and then the calculated offsets are reflected in the data subcarriers. The method of restoring $X_k$ as described above can be expressed by Equation (20).

$$X_{est}(k) = X_{equal}(k) \times \exp(-(\Phi_{k1} + \Phi_2)) \qquad \ldots\ldots(20)$$

In order to compensate for all data subcarriers that constitute the OFDM symbols, there exist values of exp $(-(\Phi_{k1} + \Phi_2))$ which compensate for $X_{equal}$ (k) and the number of which is equal to the number of data subcarriers, and an error matrix which is composed of the values is provided to perform the compensation. The restored data signal is input to the demodulation unit 215.

The last process for compensating for the phase distortion of the signal is to update $\Delta T$. That is, $\Delta T$ is updated and stored in a register provided in the phase error tracking and correction unit 213 or in the memory. It can be recognized from Equation (16) for estimating $\Delta T$ that $\Delta T_M$ estimated from the present symbol affects the estimation of $\Delta T$ that corresponds to the next symbol. Accordingly, if $\delta$ has the value of '+1" or '-1' by $\Delta T_M$ of the present symbol and the FFT window corresponding to the next symbol moves as much as one sample period, $\Delta T_M$ is updated as expressed by Equation (21), so that $\Delta T_{M+1} \approx \Delta T_M$ is maintained.

$$if, \delta = -1, then, \Delta T_M = \Delta T_M - T_{S,SPEC}$$

$$if, \delta = +1, then, \Delta T_M = \Delta T_M + T_{S,SPEC} \qquad \ldots\ldots(21)$$

$$if, \delta = 0, then, \Delta T_M = \Delta T_M$$

Through the above-described process, the frequency offset of the signal received in the OFDM system or the frequency offset which may differ according to the characteristics of elements of the receiver and the transmitter can be compensated for.

As described above, according to the present invention, since the OFDM signal can be received and processed using relatively simple construction and the frequency offset can accurately be compensated for, the received data can be obtained more efficiently.

While the present invention has been shown and described with reference to certain preferred embodiments thereof, it will be understood by those skilled in the art that various changes in form and details may be made therein without departing from the spirit and scope of the present invention as defined by the appended claims.

**Claims**

**1.** A method for compensating for errors of received symbols in an Orthogonal Frequency Division Multiplexing (OFDM) system, the method comprising the steps of:

receiving sampling data when a packet is received and setting a Fast Fourier Transform (FFT) window start point at a point prior to a start point of a first long training symbol;
estimating a wireless channel using the long training symbols;
FFT-transforming data symbols input after long training is performed and
compensating for FFT-transformed data using an estimated value;
separating pilot symbols from compensated symbols and estimating a carrier frequency offset and a sampling frequency offset from the separated pilot symbols;
extracting an influence component due to the sampling frequency offset from influences due to the estimated carrier frequency offset and sampling frequency offset;
estimating a change in the FFT window using the influence component of the extracted sampling frequency;
correcting a position of the FFT window using the change and estimating a signal distortion caused by the carrier frequency offset and carrier frequency offset using an estimated value of the change; and

compensating for phase distortion of a data signal among FFT output signals of a current symbol using an estimated value of a phase change distorted by the estimated carrier frequency offset and sampling frequency offset.

2. The method as claimed in claim 1, further comprising the step of updating the position of the FFT window.

3. The method as claimed in claim 1, wherein the FFT window is set so that the start point of the FFT window is set to a symbol that precedes the start point of the first long training symbol by a preset number of symbols.

4. The method as claimed in claim 1, wherein the start point of the FFT window with respect to the symbols input after the first long training symbol is set by,

$$n_m = n_0 + \Delta n_m + \sum_{i=0}^{m-1} \delta_k$$

where, $n_m$ denotes a sample index that relates to the start point of the FFT window corresponding to the m-th data symbol, no denotes a sample index corresponding to the start point of a first FFT window, $\Delta n_m$ denotes a sample index difference for keeping a time interval between the start point of a FFT window corresponding to the m-th data symbol and an actual start point of the corresponding symbol equal to $\theta$ with respect to the m-th data symbol if sampling frequencies of the receiver and the transmitter accurately coincide with each other where a time difference between a sample that is the start point of the first FFT window and the actual start point of the corresponding symbol is $\theta$, and $\delta_i$ denotes a value determined from a change of the time difference between the start point of a FFT window corresponding to the i-th data symbol with respect to $\theta$ and the actual start point of the corresponding symbol in order to compensate for the FFT window.

5. The method as claimed in claim 3, wherein the start point of the FFT window with respect to the symbols input after the first long training symbol is set by,

$$n_m = n_0 + \Delta n_m + \sum_{i=0}^{m-1} \delta_k$$

where, $n_m$ denotes a sample index that relates to the start point of the FFT window corresponding to the m-th data symbol, no denotes a sample index corresponding to the start point of a first FFT window, $\Delta n_m$ denotes a sample index difference for keeping a time interval between the start point of a FFT window corresponding to the m-th data symbol and an actual start point of the corresponding symbol equal to $\theta$ with respect to the m-th data symbol if sampling frequencies of the receiver and the transmitter accurately coincide with each other where a time difference between a sample that is the start point of the first FFT window and the actual start point of the corresponding symbol is $\theta$, and $\delta_i$ denotes a value determined from a change of the time difference between the start point of a FFT window corresponding to the i-th data symbol with respect to $\theta$ and the actual start point of the corresponding symbol in order to compensate for the FFT window.

6. The method as claimed in claim 1, wherein the wireless channel is estimated by,

$$\overline{H}_k = \frac{L_{1k} + L_{2k}}{2} \times \frac{1}{L_k},$$

where, $L_{1k}$ and $L_{2k}$ denote a frequency-domain sequence of the first long training symbol and a frequency-domain sequence of a second long training symbol of the received packet, respectively, and $L_k$ denotes a frequency-domain sequence of a preset long training symbol.

7. The method as claimed in claim 1, wherein the step of estimating the influences of the carrier frequency offset and the sampling frequency offset from the separated pilot signals is based on,

$$S_k = P_k * \times P_{equal}(k) = P_k * \times P_k \exp(\Phi_{k1}) \exp(\Phi_2) = \exp(\Phi_{k1}) \exp(\Phi_2).$$

**8.** An apparatus for compensating for errors of received symbols in an Orthogonal Frequency Division Multiplexing (OFDM) system, comprising:

> an Fast Fourier Transform (FFT) window adjustment unit for receiving sampling data when a packet is received, setting a start point of an FFT window at a start point of a first long training symbol, adjusting a position of the FFT window according to an input window adjustment value and outputting sampled symbols;
> an FFT unit for receiving an output of the FFT window adjustment unit, transforming time-domain symbols into frequency-domain symbols, and
> calculating and outputting FFT coefficients when the long training symbols are received;
> a channel estimation unit for receiving coefficients output from the FFT unit, estimating a channel state and outputting a value for compensating for an estimated value;
> a channel compensation unit for compensating for the frequency-domain symbols output from the FFT unit using the output of the channel estimation unit; and
> a phase error tracking and correction unit for receiving an output of the channel compensation unit, detecting a sampling frequency offset and a phase change of a carrier signal and outputting the window adjustment value to the FFT window adjustment unit.

**9.** The apparatus as claimed in claim 8, wherein the phase error tracking and correction unit updates and stores a position change of the FFT window.

**10.** The apparatus as claimed in claim 8, wherein the FFT window adjustment unit sets the FFT window so that the start point of the FFT window is set to a symbol that precedes the start point of the first long training symbol by a preset number of symbols.

**11.** The apparatus as claimed in claim 8, wherein the FFT window adjustment unit sets the start point of the FFT window with respect to the symbols input after the first long training symbol by,

$$n_m = n_0 + \Delta n_m + \sum_{i=0}^{m-1} \delta_k$$

where, $n_m$ denotes a sample index that relates to the start point of the FFT window corresponding to the m-th data symbol, no denotes a sample index corresponding to the start point of a first FFT window, $\Delta n_m$ denotes a sample index difference for keeping a time interval between the start point of a FFT window corresponding to the m-th data symbol and an actual start point of the corresponding symbol equal to $\theta$ with respect to the m-th data symbol if sampling frequencies of the receiver and the transmitter accurately coincide with each other where a time difference between a sample that is the start point of the first FFT window and the actual start point of the corresponding symbol is $\theta$, and $\delta_i$ denotes a value determined from a change in the time difference between the start point of a FFT window corresponding to the i-th data symbol with respect to $\theta$ and the actual start point of the corresponding symbol in order to compensate for the FFT window.

**12.** The apparatus as claimed in claim 8, wherein the channel estimation unit estimates the wireless channel by,

$$\overline{H}_k = \frac{L_{1k} + L_{2k}}{2} \times \frac{1}{L_k},$$

where, $L_{1k}$ and $L_{2k}$ denote a frequency-domain sequence of the first long training symbol and a frequency-domain sequence of a second long training symbol of the received packet, respectively, and $L_k$ denotes a frequency-domain sequence of a preset long training symbol.

**13.** The apparatus as claimed in claim 8, wherein the phase error tracking and correction unit estimates the influences of the carrier frequency offset and the sampling frequency offset from the separated pilot signals based on, $S_k = P_k^* \times P_{equal}(k) = P_k^* \times P_k \exp(\Phi_{k1}) \exp(\Phi_2) = \exp(\Phi_{k1}) \exp(\Phi_2)$.

FIG.1

FIG.2

EP 1 689 140 A1

FIG.3

FFT Window Adjustment ~ 400

$\delta$

Fast Fourier Transform ~ 402

Estimated Channel response ~ 404

Make Inverse Channel response ~ 406

⊗ ~ 408

Pilot subcarrier

Data subcarrier

$\text{Extract}_{\exp(\Phi_{k1} + \Phi_2)}$ ~ 411

Remove $\Phi_2$ ~ 412

Estimate $\Delta T$ ~ 413

Rub/Stuff decision ~ 414

Set $\delta$ ~ 415

410 ~

Calculate Error Matrix ~ 416

⊗ ~ 418

Update $\Delta T$ ~ 417

Demodulator ~ 420

## FIG.4

# EP 1 689 140 A1

**European Patent Office**

## EUROPEAN SEARCH REPORT

Application Number

EP 06 00 2351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/109508 A1 (JEON TAEHYUN ET AL) 10 June 2004 (2004-06-10) tracking carrier freq. offset and sampling freq. offset; detecting and compensating for offsets; updating fft window position; OFDM <br> * paragraph [0003] * <br> * paragraph [0009] * <br> * paragraph [0016] * <br> * paragraph [0017] * <br> * paragraph [0022] * <br> * paragraph [0027] * <br> * paragraph [0030] * <br> * paragraph [0037] - paragraph [0039] * <br> * paragraph [0055] * <br> * paragraph [0069] * <br> * paragraph [0076] * <br> * paragraph [0077] * <br> * paragraph [0082] - paragraph [0087] * <br> * figure 1 * <br> ----- | 1-6,8-12 | INV. <br> H04L27/26 |
| A | US 6 628 735 B1 (BELOTSERKOVSKY MAXIM B ET AL) 30 September 2003 (2003-09-30) OFDM receiver; sampling error and carrier freq. error estimation; updates windowing function w.r.t error estimates <br> * column 1, line 5 - line 10 * <br> * column 1, line 55 - line 60 * <br> * column 7, line 15 - column 8, line 20 * <br> ----- | 1-13 | TECHNICAL FIELDS SEARCHED (IPC) <br> H04L |

The present search report has been drawn up for all claims

| Place of search | Date of completion of the search | Examiner |
|---|---|---|
| The Hague | 16 June 2006 | Litton, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 2351

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2006

| Patent document cited in search report | Publication date | Patent family member(s) | Publication date |
|---|---|---|---|
| US 2004109508 A1 | 10-06-2004 | NONE | |
| US 6628735 B1 | 30-09-2003 | AU 2442301 A | 03-07-2001 |
| | | BR 0016599 A | 10-09-2002 |
| | | CN 1435037 A | 06-08-2003 |
| | | EP 1245104 A1 | 02-10-2002 |
| | | JP 2003518826 T | 10-06-2003 |
| | | MX PA02006269 A | 15-10-2004 |
| | | WO 0147204 A1 | 28-06-2001 |

EPO FORM P0459

For more details about this annex : see Official Journal of the European Patent Office, No. 12/82